(19) Europäisches Patentamt
European Patent Office
Office européen des brevets

(11) **EP 3 842 751 B1**

(12) **EUROPEAN PATENT SPECIFICATION**

(45) Date of publication and mention
of the grant of the patent:
**21.02.2024 Bulletin 2024/08**

(21) Application number: **19219750.7**

(22) Date of filing: **27.12.2019**

(51) International Patent Classification (IPC):
**G01C 21/30** (2006.01)   **G06F 16/29** (2019.01)
**G06V 20/56** (2022.01)

(52) Cooperative Patent Classification (CPC):
**G01C 21/30; G06V 20/56;** G06F 16/29

(54) **SYSTEM AND METHOD OF GENERATING HIGH-DEFINITION MAP BASED ON CAMERA**

SYSTEM UND VERFAHREN ZUR ERZEUGUNG EINER HOCHAUFLÖSENDEN KARTE AUF DER GRUNDLAGE EINER KAMERA

SYSTÈME ET PROCÉDÉ DE GÉNÉRATION DE CARTE HAUTE DÉFINITION SUR LA BASE D'UNE CAMÉRA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2019 KR 20190174457**

(43) Date of publication of application:
**30.06.2021 Bulletin 2021/26**

(73) Proprietor: **U1GIS**
**Uiwang-Si 16660 (KR)**

(72) Inventors:
 • **CHOI, In Gu**
  **15323 Seongnam-si (KR)**
 • **PARK, Jae Hyung**
  **16620 Suwon-si (KR)**
 • **KIM, Gi Chang**
  **14125 Anyang-si (KR)**
 • **KIM, Duk Jung**
  **16962 Yongin-si (KR)**

(74) Representative: **Frenkel, Matthias Alexander et al**
**Wuesthoff & Wuesthoff**
**Patentanwälte PartG mbB**
**Schweigerstraße 2**
**81541 München (DE)**

(56) References cited:
**EP-A2- 3 244 165**

 • **Xiaozhi Qu: "Landmarkbasedlocalization : Detectionandupdateof landmarkswithuncertaintyanalysis", , 12 September 2017 (2017-09-12), XP055711514, Retrieved from the Internet: URL:https://tel.archives-ouvertes.fr/tel-0 1586207/document [retrieved on 2020-07-03]**
 • **Yu Huang: "A Low Cost Vehicle Localization System based on HD Map", , 4 December 2019 (2019-12-04), XP055711509, Retrieved from the Internet: URL:https://medium.com/@yuhuang_63908/a-lo w-cost-vehicle-localization-system-based-o n-hd-map-50d464ba5d8f [retrieved on 2020-07-03]**
 • **Joel Janai ET AL: "Computer Vision for Autonomous Vehicles: Problems, Datasets and State of the Art", , 17 December 2019 (2019-12-17), XP055657497, Retrieved from the Internet: URL:https://arxiv.org/pdf/1704.05519.pdf [retrieved on 2020-01-14]**

EP 3 842 751 B1

**Description**

## TECHNICAL FIELD

Various embodiments of the disclosure relate to technology of automatically creating and updating a high-definition map based on a camera(s).

## DESCRIPTION OF RELATED ART

An autonomous vehicle may recognize its position and ambient environment and create a route along which the vehicle may drive safely and efficiently based on the recognized information. The autonomous vehicle may control its steering and speed along the created route.

The autonomous vehicle may recognize its ambient environment (e.g., road facilities, such as lanes or traffic lights or landmarks) using its sensors (e.g., cameras, laser scanners, radar, global navigation satellite system (GNSS), or inertial measurement unit (IMU)) and create a route based on the recognized ambient environment. This way, however, may not work if the ambient environment is difficult to recognize, such as when there are no road lanes or the road environment is very complicated.

A high-definition map provides both 3D high-definition location information and detailed road information, e.g., precise lane information and other various pieces of information necessary for driving, such as the position of traffic lights, the position of stop lines, and whether lanes are changeable lanes or whether intersections are ones permitting a left turn. The autonomous vehicle may drive more safely with the aid of the high-definition map. The high-definition map used for controlling the autonomous vehicle is a three-dimensional (3D) stereoscopic map up to an accuracy of 30cm for autonomous driving. Whereas the accuracy of ordinary 1/1,000 maps (digital maps) is 70cm, the high-definition map is as accurate as 25cm or less. This is ten times as accurate as navigation maps whose accuracy is 1m to 2.5m.

The high-definition map is also utilized for gathering event information on the road based on precise location information via a dashboard camera that is equipped with various safety functionalities, such as forward collision warning or lane departure warning. The high-definition map may also be used for information exchange for camera-equipped connected cars and precise positioning by gathering event information and information for various road facilities using various camera-equipped vehicles.

To build up a high-definition map, the mobile mapping system is used. The MMS is a mobile 3D spatial information system incorporating a digital camera, a 3D laser scanner system (LiDAR), GNSS, and IMU. The MMS is equipped in a moving body, e.g., a vehicle. An MMS-equipped vehicle may perform 360-degree, omni-directional capturing or recording while driving 40km to 100km per hour. The MMS is a very expensive piece of equipment. Creation and update of a high-definition map using the MMS consumes lots of labor and costs. The MMS cannot quickly update the high-definition map when changes are made to the road condition and may rather harm the safety of autonomous vehicles that rely on the high-definition map for autonomous driving.

Thus, a need exists for new technology that may decrease communication loads and costs in creating a high-definition map.

Xiaozhi Qu: "Landmark based localization : Detection and update of landmarks with uncertainty analysis", 12 September 2017, is related to mobile mapping that is the process of collecting geospatial data with a moving vehicle. These vehicles are often equipped with two types of sensors: remote sensing (cameras, lidar, radar) and geo-localization (GNSS, IMU, odometer). The objective of the thesis is to provide a low cost positioning solution that can be used on a large number of map updating vehicles. It is proposed to use one or more cameras on a vehicle as a georeferencing system.

## SUMMARY

The high-definition map creating system requires many probe vehicles to update the high-definition map in real-time responsive to road changes and is thus very cost-consuming for maintenance. Since the MMS gathers lots of data per hour, it may have difficulty in updating the high-definition map by real-time receiving and processing data received from the probe vehicles.

The solution is provided by the features of the independent claims. Variations are as described by the dependent claims.

Various embodiments of the disclosure recognize road facility objects and create a high-definition map using only GCP information and feature points corresponding to the recognized objects, thus creating a high-definition map in a quick and exact manner and reducing costs for implementing probe vehicles and hence saving costs for creating a high-definition map. Other various effects may be provided directly or indirectly in the disclosure.

## BRIEF DESCRIPTION OF THE DRAWINGS

A more complete appreciation of the disclosure and many of the attendant aspects thereof will be readily obtained as the same becomes better understood by reference to the following detailed description when considered in connection with the accompanying drawings, wherein:

Fig. 1 is a view illustrating an automated, camera-based high-definition map creating system according to an embodiment;
Fig. 2 is a block diagram illustrating a map creating device according to an embodiment;
Fig. 3 is a block diagram illustrating a map creating unit in a map creating device according to an embodiment;
Fig. 4 is a block diagram illustrating a map creating server according to an embodiment;
Fig. 5 is a block diagram illustrating a map correcting unit of a map creating server according to an embodiment;
Fig. 6 is a flowchart illustrating an automated, camera-based high-definition map creating method according to an embodiment;
Fig. 7 is a flowchart illustrating an automated, camera-based high-definition map creating method according to an embodiment; and
Fig. 8 is a view illustrating information flows in a map creating device and a map creating server according to an embodiment.

The same or similar reference denotations may be used to refer to the same or similar elements throughout the specification and the drawings.

## DETAILED DESCRIPTION OF EXEMPLARY EMBODIMENTS

Some terms as used herein may be defined as follows.

'Road facility object' refers to a facility included in a precise map and includes at least one of pavement markings, warning signs, regulatory signs, mandatory signs, additional signs, traffic signs, traffic lights, traffic lights, poles, manholes, curbs, median barriers, fire hydrants, and/or buildings. Road facility objects may be fixed and displayed on the road or may be facilities in the air, such as traffic lights, some feature points of buildings, or signs, or may be displayed on such facilities.

'Road facility object' may refer to any kind of facility that may be included in a precise map and its concept may encompass pavement markings, warning signs, regulatory signs, mandatory signs, additional signs, traffic signs, traffic lights, traffic lights, poles, manholes, curbs, median barriers, fire hydrants, buildings, and/or building signs. In the disclosure, at least one or more of such objects may be used. For example, road center lines, solid lines, broken lines, turn-left arrows, drive straight ahead arrows, slow-down diamond-shaped markings, speed limit zone markings, or any other various kinds of pavement markings which may be painted on the road, traffic lights, poles, manholes, fire hydrants, curbs, median barriers, sign boards, or any other various road structures which are installed on the road and various signs or markings on the structures, or traffic lights, various kinds of signs or markings on traffic control devices or traffic lights, and buildings may belong to facility objects.

'Ground control point (GCP)' refers to a coordinate point used for absolute orientation, whose exact coordinates have been known. In the disclosure, among various road facility objects, manhole covers, fire hydrants, ends or connectors of road facilities, or road drainage structures may be used as GCP objects.

'High-definition road map' refers to a map information database which includes and stores the respective properties (or attributes) of road facility objects and spatial coordinate information for the feature points of road facility objects. The respective feature points of road facility objects included in the high-definition map may correspond to spatial coordinate information for the feature points in a one-to-one correspondence manner. As used herein, "feature point of a road facility object" refers to a featuring point in the road facility. For example, in an image of a road facility object, the inside or outside vertexes whose boundary is noticeable by clear changes in color and brightness or noticeable points in the contour may be feature points. Thus, a feature point of a road facility object may be a vertex or any point in an edge of the road facility object.

The high-definition map is an electronic map created with all road facility object information necessary for autonomous driving and is used for autonomous vehicles, connected cars, traffic control, and road maintenance.

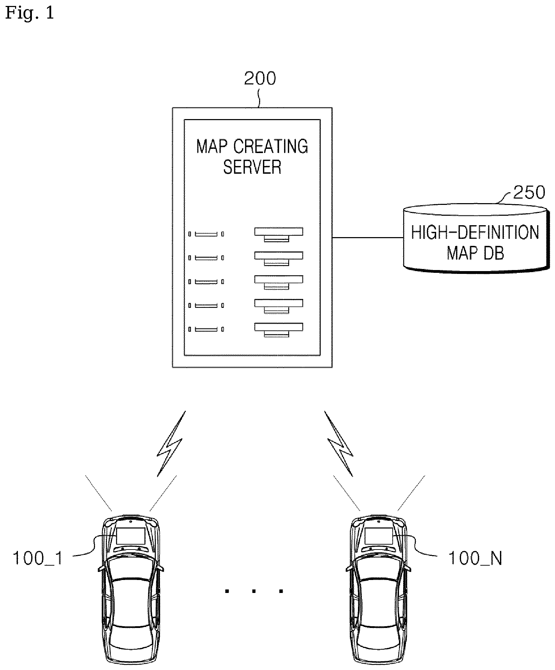

Fig. 1 is a view illustrating an automated, camera-based high-definition map creating system according to an embodiment.

Referring to Fig. 1, an automated, camera-based high-definition map creating system includes at least one or more map creating devices 100_1 to 100_n and a map creating server 200.

Each map creating device 100_1 to 100_n is a device that is mounted in a probe vehicle to create a high-definition map. The map creating device 100_1 to 100_n creates a high-definition map using road images including images of road facility objects captured by the camera fixed to the probe vehicle.

High-definition road map information created by the high-definition map created by the map creating device 100_1 to 100_n is transmitted to the map creating server 200. The map creating server 200 compiles and merges the high-definition map information gathered from each map creating device 100_1 to 100_n, finally completing a high-definition map for the whole area.

The map creating device 100_1 to 100_n needs to be aware of the spatial coordinates of a GCP object or a specific road facility object near an initial start point to grasp the location of the camera at the initial start point.

An orthoimage is created by aerial-photographing a specific area or an area with a GCP object. The spatial coordinates of all the pixels included in the orthoimage are determined with respect to a ground reference point included in the aerial image based on real-time kinematic (RTK) positioning. In such a way, absolute spatial coordinates may be assigned to each road facility object around the GCP object in the specific area or the area with the GCP object. The feature point of the absolute spatial coordinates-assigned road facility object is defined herein as a coordinate point.

The map creating device 100 may extract and recognize at least one or more road facility objects, which correspond to ground control points (GCPs), or ordinary objects (e.g., objects around GCP objects) whose spatial coordinates have already been known from the road image, identify the property of the at least one or more recognized road facility objects and spatial coordinates of the coordinate points, and determine the location (e.g., spatial coordinates) of the camera at the time of capturing the road image based on the spatial coordinates of the coordinate points of the road facility objects.

The map creating device 100 may determine the spatial coordinates of the feature points and the property of all the road facility objects in the road image based on the determined location and create a database of the property of all the road facility objects and spatial coordinates of feature points, thereby creating a high-definition map.

Then, after the camera-equipped probe vehicle drives a predetermined distance, the camera may capture in the direction of the car driving to thereby create a subsequent road image including at least one or more road facility objects. In this case, the subsequent road image includes some of the road facility objects whose spatial coordinates have been determined via the prior image.

The map creating device 100 may receive and obtain the subsequent road image from the camera. The subsequent road image may be an image resultant from capturing the road in the driving direction after the vehicle has driven a predetermined distance from the prior capturing position. The subsequent road image may include at least one or more of at least one or more reference road facility objects (also referred to as GCP objects) or road facility objects for which the feature point spatial coordinates have been known in the road image.

The map creating device 100 may identify the location of camera capturing (e.g., the location of the vehicle) based on the spatial coordinates of the feature points of the reference road facility objects (also referred to as GCP objects) or road facility objects whose spatial coordinates have been known in the subsequent road image.

In this case, the map creating device 100 may determine the spatial coordinates of the feature points of all the road facility objects included in the subsequent road image based on the spatial coordinates of the feature points of the GCP objects or road facility objects whose spatial coordinates have been known and create a database thereof, thereby creating a high-definition map.

The map creating device 100 may determine the property and feature point spatial coordinates of other road facility objects based on the road facility objects whose spatial coordinates have been known and create a database of the determined object properties and spatial coordinates, thereby creating a high-definition map. The above-described process may be repeated whenever the vehicle drives a predetermined distance. In such a way, a high-definition map for a broader area and even a nationwide high-definition map may be created. Thus, the map creating device 100 may secure data for creating or updating a high-definition map using camera-equipped vehicles without the need for a high-cost MMS.

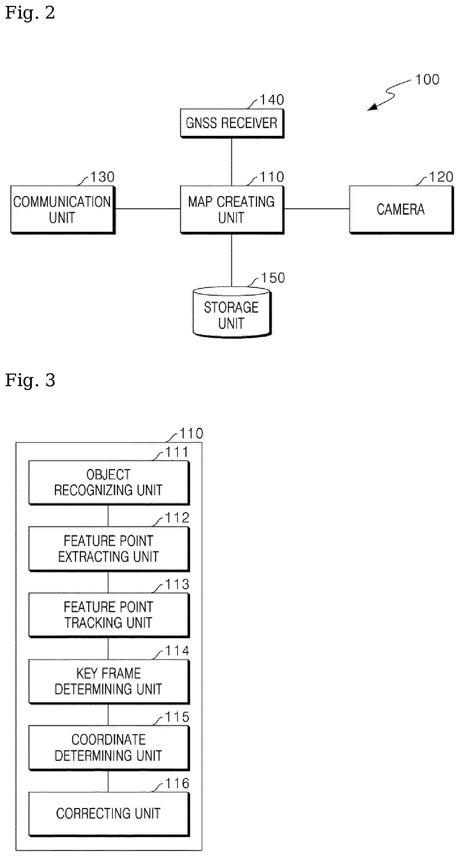

Fig. 2 is a block diagram illustrating a map creating device 100 according to an embodiment.

Referring to Fig. 2, according to an embodiment, a map creating device 100 includes a map creating unit 110. The map creating device 100 may further include at least one of a camera 120, a communication unit 130, a GNSS receiver 140, and a storage unit 150. Although not shown in Fig. 2, the map creating device 100 may further include IMU(Inertial Measurement Unit).

The map creating unit 110 creates a high-definition map using a road image including images of road facility objects captured by a camera.

The camera 120 is fixed to a probe vehicle. The camera 120 captures in the forward direction of the vehicle to create a road image including road facility object images. The created road image is transferred to the map creating device 100.

The communication unit 130 communicates with the map creating server 200. The communication unit 130 transmits the high-definition map created by the map creating device 100 and the road image captured by the camera 120 to the map creating server 200. As described below, an image resultant from extracting only key frames from the road image may be transmitted.

The GNSS receiver 140 periodically obtains GNSS location information. In particular, the GNSS receiver 140 may obtain the GNSS location information for the capturing location of the camera 120 at the time synchronized with the capturing time of the camera 120. The global navigation satellite system (GNSS) is a positioning or locating system using satellites and may use the global positioning system (GPS).

The storage unit 150 stores the road image captured by the camera 120 and the high-definition map created by the map creating device 100.

Fig. 3 is a block diagram illustrating a map creating unit in a map creating device according to an embodiment.

Referring to Fig. 3, according to an embodiment, a map creating device 100 may include an object recognizing unit 111, a feature point extracting unit 112, a feature point tracking unit 113, a coordinate determining unit 115, and a correcting unit 116. The map creating device 100 may further include a key frame determining unit 114.

The object recognizing unit 111 recognizes road facility objects including at least one of GCP objects and ordinary objects from each frame and the properties of the road facility objects. The object recognizing unit 111 recognizes road facility objects and their properties from the road image via machine learning, including deep learning, or other various image processing schemes.

The object recognizing unit 111 may correct distortions in the road image which may occur due to the lenses, detect moving objects, e.g., vehicles, motorcycles, or humans, from the road image, and remove or exclude the moving objects, thereby allowing the stationary road facility objects on the ground or in the air to be efficiently recognized.

The feature point extracting unit 112 extracts the feature points of at least one or more road facility objects from the road image. The feature point extracting unit 112 extracts myriad feature points of road facility objects recognized by the object recognizing unit 111. To detect feature points, various algorithms may apply which include, but are not limited to, features from accelerated segment test (FAST), oriented FAST and rotated BRIEF (ORB), scale-invariant feature transform (SIFT), adaptive and generic accelerated segment test (AGAST), speeded-up robust features (SURF), binary robust independent elementary features (BRIEF), Harris corner, and/or Shi-Tomasi corner.

The feature point tracking unit 113 matches and tracks the feature points of the road facility objects extracted from each frame of the road image on each consecutive frame.

The key frame determining unit 114 may determine a key frame in each frame of the road image to reduce the amount of computation of the coordinate determining unit 115 and perform control so that the computation of the pose obtaining unit and the spatial coordinates determining unit is performed only in the determined key frame.

To that end, the key frame determining unit 114 analyzes the feature points of each frame in the road image and determines that the frame when the relative spatial coordinates of the feature point has moved a reference range or more between the frames is the key frame. Since 'key frame' means a frame where a large change occurs among the image frames of the road image, the frame where the relative spatial coordinates of the feature point has moved the reference range or more may be determined to be the key frame. The case where the relative spatial coordinates of the feature point has moved the reference range or more means that the vehicle moves a predetermined distance or more so that the change in position of the feature point in the road image has shifted the reference range or more. Tracking the feature point of the road image which makes no or little change as when the vehicle stops or moves slowly may be meaningless. Thus, the computation loads may be reduced by determining that the frame after the vehicle has moved a predetermined distance is the key frame and tracking the feature points using only the key frame.

The key frame determining unit 114 may further reduce the computation loads by determining that the same feature point present in a plurality of key frames is a tie point and deleting the other feature points than the determined tie point.

The coordinate determining unit 115 obtains relative spatial coordinates of the feature point to minimize a difference between camera pose information predicted from the tracked feature point and calculated camera pose information. At this time, the coordinate determining unit 115 may determine the relative spatial coordinates or absolute spatial coordinates of the feature point of the road facility object per frame of the road image.

The correcting unit 116, upon recognizing a GCP object, obtains the absolute spatial coordinates of the feature point by correcting the relative spatial coordinates of the feature point with respect to the coordinate point of the GCP object whose spatial coordinates has been known.

Since the road facility object is a fixed object on the ground or in the air, the road facility object present in the road image may be positioned on the road or in the air.

The coordinate determining unit 115 may identify whether the road facility object included in the road image is a road object which is positioned on the road or a mid-air object which is positioned in the air based on the properties of the road facility object.

If the position of the road facility object is determined, the coordinate determining unit 115 may determine the spatial coordinates of the feature point of the road facility object in two methods as follows.

The first method may determine both the spatial coordinates of the road object and the spatial coordinates of the mid-air object. In the first method, the spatial coordinates of each object whose spatial coordinates are not known are determined based on the camera pose information in each frame of the road image.

If each feature point is tracked in the continuous frames or key frame in the road image, the correspondence between the image frames may be traced so that the position of each feature point or the pose information for the camera may be predicted.

In this case, a difference may occur between the position of the feature point or the camera pose information, which is predicted from the correspondence between image frames, and the position of each feature point or camera pose information, which is computed from each frame of the road image and, in the process of minimizing the difference, the relative spatial coordinates of each feature point in each frame and relative camera pose information may be obtained.

The obtained spatial coordinates of the feature point and camera pose information may be represented as a value relative to a reference position or a reference pose. Thus, if the absolute spatial coordinates of a feature point or exact pose information for the camera is known at a certain time, the obtained relative spatial coordinates of feature point and the relative pose information for the camera may be corrected to a precise value.

Coordinate points whose absolute spatial coordinates have already been known are present in the GCP object, and the properties of the GCP object and information for coordinate points whose absolute spatial coordinates may be known in the GCP object are previously stored in the map creating device.

Thus, if the GCP object is recognized, the coordinate determining unit 115 detects at least four coordinate points whose spatial coordinates have been known and obtains the camera pose information using a pin hole camera model from the at least four coordinate points detected.

The camera pose information is information for the position and pose of the camera, and the camera pose information includes information for the spatial coordinates, the roll, pitch, and yaw of the camera.

External parameters of the camera may be obtained via the pin hole camera model based on Equation 1.

$$[\text{Equation 1}]$$

$$s\, p_c = K\left[R\,|\,T\right] p_w$$

In Equation 1, K is the intrinsic parameter of the camera, [R|T] is the extrinsic parameter of the camera, $P_w$ is the 3D spatial coordinates, $P_c$ is the 2D camera coordinates corresponding to the 3D spatial coordinates, and s is the image scale factor. The extrinsic parameter of the camera is a parameter that specifies the transform relationship between the 2D camera coordinating system and the 3D world coordinating system. The extrinsic parameter includes information for the pose(roll, pitch, and yaw of the camera) and the installation position of the camera and is expressed with the rotation matrix R and the translation matrix T between the two coordinating systems.

Equation 1 may be represented as Equation 2.

$$[\text{Equation 2}]$$

$$s\begin{bmatrix} u \\ v \\ 1 \end{bmatrix} = \begin{bmatrix} f_x & \gamma & u_0 \\ 0 & f_y & v_0 \\ 0 & 0 & 1 \end{bmatrix} \begin{bmatrix} r_{11} & r_{12} & r_{13} & t_1 \\ r_{21} & r_{22} & r_{23} & t_2 \\ r_{31} & r_{32} & r_{33} & t_3 \end{bmatrix} \begin{bmatrix} x \\ y \\ z \\ 1 \end{bmatrix}$$

Here, (x, y, z) is the 3D spatial coordinates of the world coordinating system, $f_x$ is the focal length in the x axis direction, $f_y$ is the focal length in the y axis direction, (u, v) is the 2D camera coordinates of the camera coordinating system, $\gamma$ is the skew coefficient which indicates the degree of y-axis tilt of the image sensor cell array, and $(u_0, va)$ is the camera coordinates of the principal point of the camera.

Since the absolute spatial coordinates of at least four points in the frame of the road image are known, and the intrinsic parameter of the camera and image scale factor may be known, the camera pose information may be obtained via the above equations.

The correcting unit 116 may correct the relative spatial coordinates of each feature point in the frame with respect to the camera pose information so obtained, thereby obtaining the absolute spatial coordinates.

The second method is to determine the spatial coordinates of the road object positioned on the road. In the second method, the spatial coordinates of each road object whose spatial coordinates is not known in each frame of the road image are determined via homography transform.

Homography may be used for positioning of the probe vehicle and the spatial coordinates of the road object. If one plane is projected onto another plane, a predetermined transform relationship is formed between the projected corresponding points, and such a transform relationship is called homography.

Since a homography transform function is a function that defines the relationship between each dimensional image and one absolute coordinating system (absolute spatial coordinates), the homography transform function may transform the image coordinates of the camera into the spatial coordinates of the absolute coordinating system. From the spatial coordinates of the four points whose spatial coordinates have previously been known and the camera coordinates in the points, the spatial coordinates of all of the other points of the road may be computed using the transform relationship.

As described above, the correcting unit 116 performs final correction on the absolute spatial coordinates of the road facility object via the process of correcting the camera pose information, and the feature points of the road facility objects gathered per frame in the road image.

Correction of the spatial coordinates of the road facility object may be performed using four schemes as follows.

The first scheme, not claimed, is a local bundle adjustment (LBA) scheme that bundles up the per-frame camera pose information and performs correction via comparison between the actually computed value and the predicted value.

In the second scheme, not claimed, if a new GCP object is discovered after the initial start point in the road image, the determined spatial coordinates of feature point are corrected based on the absolute spatial coordinates of the new GCP object. The spatial coordinates of the feature points previously obtained may be simultaneously corrected based on the error between the spatial coordinates determined by the coordinate determining unit 115 and the absolute spatial coordinates of the newly recognized GCP object.

In the third scheme, not claimed, if the probe vehicle, after starting driving, passes again the area that it has passed before, a loop route forming a loop from the route that the probe vehicle has passed is determined, and the absolute spatial coordinates of the feature points of the road facility objects present in the loop route may be corrected based on the difference between the absolute spatial coordinates of the feature point of the road facility object determined in the past and the absolute spatial coordinates of the feature point currently determined.

In the fourth and last scheme according to the claims, a route which at least two or more probe vehicles have passed through is analyzed to detect an overlapping route, which overlaps in route and direction, and the spatial coordinates of the feature point of the road facility object present in the overlapping route may be corrected based on the difference in spatial coordinates at the overlapping route determined by each probe vehicle. The fourth scheme requires analysis of the vehicle routes with a high-definition map created by several map creating devices 100 and, thus, is used primarily in the map creating server 200.

According to an embodiment, the spatial coordinates of the feature point of the road facility object may be corrected using the fourth scheme. As described below, correction of spatial coordinates may be performed by the map creating device 100 mounted on the vehicle or by the map creating server 200.

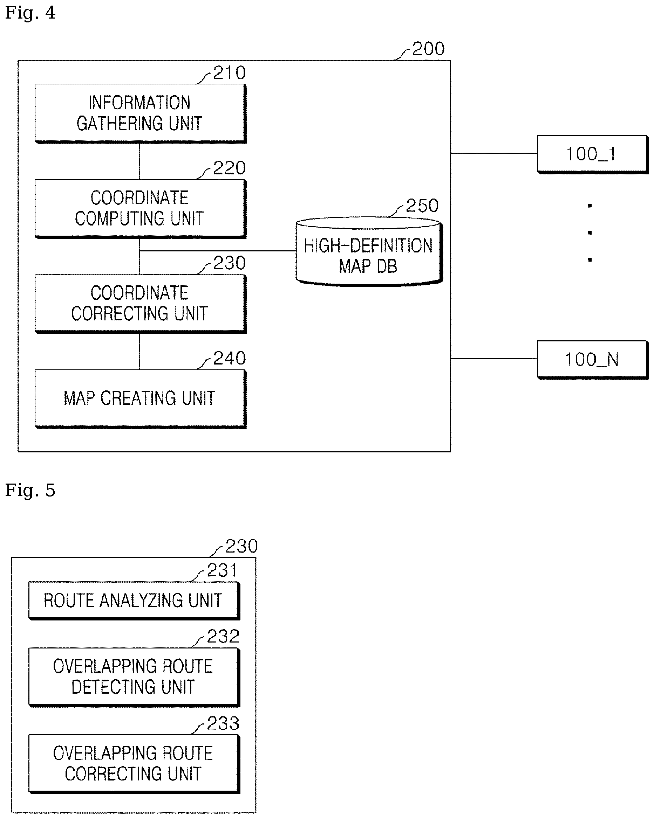

Fig. 4 is a block diagram illustrating a map creating server 200 according to an embodiment.

Referring to Fig. 4, the map creating server 200 includes at least one of an information gathering unit 210, a coordinate computing unit 220, a coordinate correcting unit 230, a map creating unit 240, and a high-definition map database (DB) 250.

The information gathering unit 210 gathers information for a high-definition map and a road image from each map creating device 100_1 to 100_n. The information for the high-definition map includes the properties of each road facility object and the absolute spatial coordinates of feature points. The information gathering unit 210 may receive road images constituted only of key frames or receive road images resulting from deleting feature points except for tie points so as to reduce computation loads.

The coordinate computing unit 220 may compute the spatial coordinates of each road facility object from the road image received from each map creating device 100_1 to 100_n. The map creating server 200 may receive, from each map creating device 100_1 to 100_n, and store the high-definition map, or the map creating server 200 may receive the road image from each map creating device 100_1 to 100_n and compute the spatial coordinates of each road facility object from the received road image.

Although not shown in Fig. 4, the coordinate computing unit 220 may, to that end, include components that perform the same functions as those of the object recognizing unit 111, the feature point extracting unit 112, the feature point tracking unit 113, the key frame determining unit 114, and the coordinate determining unit 115 of Fig. 3.

The coordinate correcting unit 230 may correct the spatial coordinates of the road facility object computed by the coordinate computing unit 220 or the spatial coordinates of each road facility object received from each map creating device 100_1 to 100_n. The coordinate correcting unit 230 uses the above-described fourth scheme for correcting spatial coordinates.

The map creating unit 240 may merge the high-definition map information gathered from each map creating device 100_1 to 100_n to complete a full final high-definition map.

The high-definition map information merged by the map creating unit 240 may be created into a database that is then stored in the high-definition map DB 250.

Fig. 5 is a block diagram illustrating a map correcting unit of a map creating server according to an embodiment.

Referring to Fig. 5, the coordinate correcting unit 230 of the map creating server 200 includes at least one of a route analyzing unit 231, an overlapping route detecting unit 232, and an overlapping route correcting unit 233.

The route analyzing unit 231 analyzes the route which at least two or more probe vehicles equipped with the map creating device 100_1 to 100_n have passed. The overlapping route detecting unit 232 detects an overlapping route that overlaps in route and direction. The overlapping route correcting unit 233 corrects the spatial coordinates of the feature point of the road facility object present in the detected overlapping route based on the difference in the absolute spatial coordinates of the feature point determined by each map creating device 100_1 to 100_n.

If the spatial coordinates of the feature point of the road facility object present in the detected overlapping route are corrected, the coordinate correcting unit 230 may extract all the map creating devices that have passed the overlapping route and perform correction on the whole route that each map creating device has passed based on the corrected spatial coordinates in the overlapping route.

An automated, camera-based high-definition map creating method is described below according to an embodiment. The automated, camera-based high-definition map creation method may be performed by the automated, camera-based high-definition map creation system and map creating device described above.

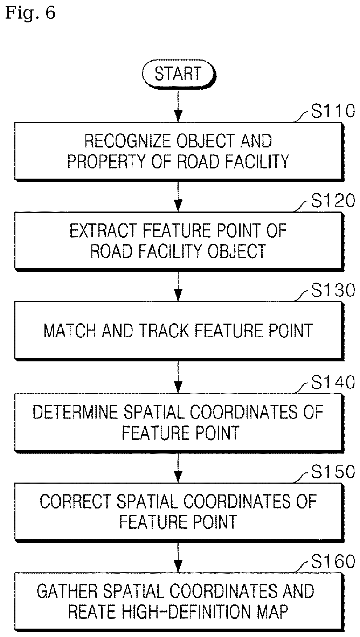

Fig. 6 is a flowchart illustrating an automated, camera-based high-definition map creating method according to an embodiment.

The map creating device 100 recognizes, per frame of the road image, the properties and road facility objects including at least one of GCP objects and ordinary objects from each frame of the road image (S110). Machine learning including deep learning or other various image processing schemes may be used to recognize the road facility objects.

Then, the map creating device 100 extracts the feature points of at least one or more road facility objects from the road image (S 120).

Then, the map creating device 100 matches and tracks the feature points of all the road facility objects extracted from each frame of the road image on each consecutive frame (S130).

After matching the feature points, the map creating device 100 obtains relative spatial coordinates of the feature point to minimize a difference between camera pose information predicted from the tracked feature point and calculated camera pose information (S140).

Then, the map creating device 100, upon recognizing a GCP object, obtains the absolute spatial coordinates of the feature point by correcting the relative spatial coordinates of the feature point with respect to the coordinate point whose absolute spatial coordinates has been known around the GCP object (5150).

The properties of each road facility object and the corrected spatial coordinates of feature points are transmitted to the map creating server 200, and the road image may also be transmitted to the map creating server 200.

The map creating server 200 may gather the properties of each road facility object and the corrected spatial coordinates of feature points from at least one or more map creating devices 100 and merge them, thereby completing a full high-definition map (S160).

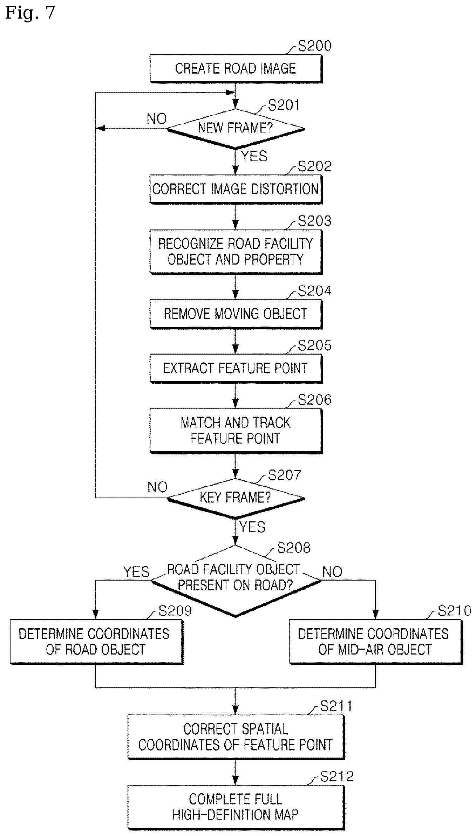

Fig. 7 is a flowchart illustrating a high-definition map creating method according to an embodiment.

The camera mounted on each map creating device 100 captures in the forward direction of the vehicle, generating a road image including images of at least one or more road facility objects (S200). The created road image is transferred to the map creating device 100.

The map creating device 100 analyzes each frame of the road image and, if the current frame is a new frame (S201), corrects image distortion in the current frame (S202). If the current frame is not a new frame, the map creating device 100 continues to receive the road images.

The map creating device 100 recognizes road facility objects including at least one of GCP objects and ordinary objects from the current frame and the properties of the road facility objects (S203).

The map creating device 100 simultaneously detects and remove moving objects, e.g., vehicles, motorcycles, or persons, from the current frame of the road image (S204).

Then, the map creating device 100 extracts the feature points of at least one or more road facility objects from the current frame of the road image (S205).

Then, the map creating device 100 matches the feature points of all the road facility objects extracted from the current frame with those in the prior frame and track them (S206).

At this time, the map creating device 100 analyzes the feature points in the current frame and the prior frame and determines whether the current frame is a key frame (S207). If the relative spatial coordinates of the feature point in the current frame are determined to have been moved a reference range or more from those in the prior frame, the map creating device 100 determines that the current frame is a key frame.

If the current frame is determined to be a key frame, the map creating device 100 determines the relative spatial coordinates of the feature point to minimize the difference between camera pose information predicted from the tracked feature point and camera pose information actually computed from the road image.

Different schemes of determining the spatial coordinates may apply depending on whether the road facility object is a road object or a mid-air object.

The map creating device 100 determines whether the road facility object included in the road image is a road object or a mid-air object based on the properties of the road facility object (S208).

If the road facility object is a road object, the map creating device 100 applies homography transform to at least four coordinate points whose spatial coordinates have already been known in the frame of the road image, thereby determining the spatial coordinates of each road object whose spatial coordinates are not known (S209).

If the road facility object is a mid-air object, the map creating device 100 allows the difference between the camera pose information predicted from the image frame correspondence and the camera pose information actually computed from the road image frame to be minimized and determines the spatial coordinates of each feature point in the road image frame (S210).

Steps S201 to S210 are repeatedly performed on each of the consecutive frames of the road image so that the spatial coordinates of road facility object feature point are determined per frame of the road image.

The map creating device 100, upon recognizing a GCP object, corrects the spatial coordinates of the feature point with respect to the coordinate point whose spatial coordinates has been known in the GCP object (S211).

The properties of the road facility objects and corrected spatial coordinates of feature points are transmitted to the map creating server 200, and the map creating server 200 compiles and merges the received information, thereby completing a full high-definition map (S212).

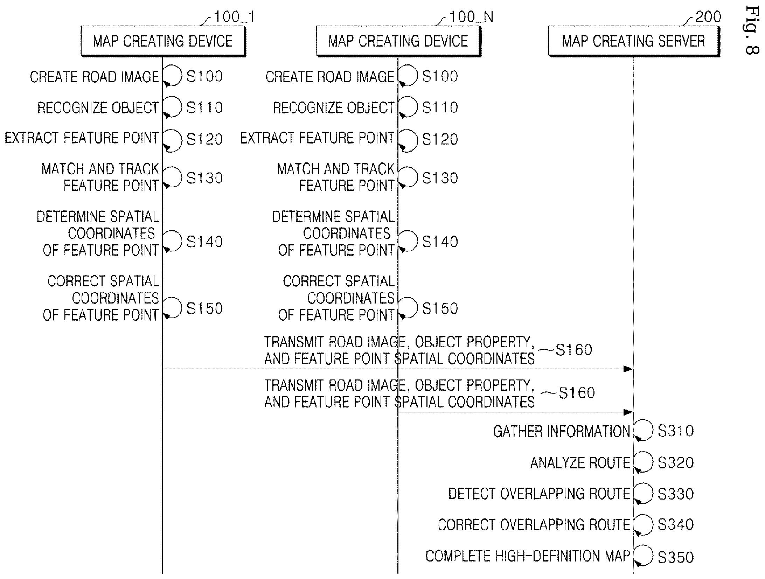

Fig. 8 is a view illustrating information flows in a map creating device and a map creating server according to an embodiment.

Each map creating device 100_1 to 100_n is a device that is mounted in a probe vehicle to create a high-definition map. The map creating device 100_1 to 100_n creates a high-definition map using road images including images of road facility objects captured by the camera fixed to the probe vehicle.

Road image creation (S100), recognition of road facility objects and properties (S110), feature point extraction (S120), feature point matching and tracking (S130), determination of feature point spatial coordinates (S140), and correction of feature point spatial coordinates (S150) are independently performed in each map creating device 100_1 to 100_n. These steps are substantially the same as those described above and, thus, no detailed description thereof is given below.

High-definition road map information and road image created by each map creating device 100_1 to 100_n is transmitted to the map creating server 200 (S160). The high-definition map information includes the properties of each road facility object recognized and the corrected spatial coordinates of the feature point of each road facility object.

The map creating server 200 gathers the road image and high-definition map information from each map creating device 100_1 to 100_n (S310).

Then, the map creating server 200 analyzes the route that at least two or more map creating devices 100_1 to 100_n have passed (S320).

The map creating server 200 detects an overlapping route that overlaps in route and direction from the analyzed route (S330).

The map creating server 200 corrects the spatial coordinates of the feature point of the road facility object preset in the detected overlapping route based on the difference in the spatial coordinates of the feature point determined by each map creating device in the overlapping route (S340).

Lastly, the map creating server 200 gathers and merges the properties of each road facility object and the corrected spatial coordinates of feature points, thereby completing a full high-definition map (S350).

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a controller (e.g., the controller 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

**Claims**

1. A system creating a high-definition map based on a camera (120), the system comprising

   at least one or more map creating devices (100), whereby each map creating device is a device that is mounted in a probe vehicle, creating a high-definition map using a road image including an image of a road facility object captured by a camera (120) fixed to the probe vehicle, each of the at least one or more high-definition map creating devices (100) comprising

   an object recognizing unit (111) recognizing, from each frame of the road image, a road facility object including at least one of a ground control point (GCP) object and an ordinary object and a property;
   a feature point extracting unit (112) extracting a feature point of at least one or more road facility objects from the road image;
   a feature point tracking unit (113) matching and tracking the feature point in consecutive frames of the road image;
   a coordinate determining unit (115) obtaining relative spatial coordinates of the feature point to minimize a difference between camera pose information predicted from the tracked feature point and calculated camera pose information; and
   a correcting unit (116) obtaining absolute spatial coordinates of the feature point by correcting the relative spatial coordinates of the feature point based on a coordinate point of the GCP object whose absolute spatial coordinates are known when the GCP object is recognized,

   wherein the road facility object is a road object positioned on a road or a mid-air object positioned in the air, and wherein the coordinate determining unit (115) determines whether the road facility object is the road object or the mid-air object based on a property of the road facility object and obtains absolute spatial coordinates of the road object in each frame of the road image using a homography transform on at least four coordinate points whose spatial coordinates have been known;
   the system further comprising a map creating server (200) gathering absolute spatial coordinates of feature point and a property of each road facility object from the at least one or more map creating devices (100) to create the high-definition map,
   wherein the map creating server (200) analyzes a route which at least two or more of the camera-equipped probe vehicles have passed through to detect an overlapping route and corrects spatial coordinates of a feature point of a road facility object present in the overlapping route based on a difference between absolute spatial coordinates of the feature point determined by the probe vehicles.

2. The system of claim 1, wherein each of the at least one or more map creating devices (100) further comprises a key frame determining unit (114) determining that a frame when the relative spatial coordinates of the feature point are moved a reference range or more between consecutive frames of the road image is a key frame and controlling the coordinate determining unit to perform computation only in the key frame.

3. The system of claim 2, wherein the key frame determining unit (114) determines that the same feature point present in a plurality of key frames is a tie point and deletes feature points except for the determined tie point.

4. The system of claim 1, wherein the correcting unit (116), if the probe vehicle passes again through an area which the probe vehicle has previously passed through, detects a loop route from a route along which the probe vehicle has travelled and corrects absolute spatial coordinates of a feature point of a road facility object present in the loop route based on a difference between absolute spatial coordinates of the feature point determined in the past in the area and absolute spatial coordinates of the feature point currently determined.

5. The system of claim 1, wherein the GCP object includes at least one of a manhole cover, a fire hydrant, an end or connector of a road facility, or a road drainage structure.

6. A method of creating a high-definition map based on a camera (120), the method creating a high-definition map using a road image including an image of a road facility object captured by a camera (120) fixed to a probe vehicle, the method comprising:

recognizing (S110), per frame of the road image, a road facility object including at least one of a ground control point (GCP) object and an ordinary object and a property;
extracting (S120) a feature point of at least one or more road facility objects from the road image;
matching and tracking (S130) the feature point in consecutive frames of the road image;
obtaining (S140) relative spatial coordinates of the feature point to minimize a difference between camera pose information predicted from the tracked feature point and calculated camera pose information;
obtaining (S160) absolute spatial coordinates of the feature point by correcting (S150) the relative spatial coordinates of the feature point based on a coordinate point of the GCP object whose absolute spatial coordinates are known when the GCP object is recognized,
gathering, by a map creating server (200), absolute spatial coordinates of feature point and a property of each road facility object from at least one or more probe vehicles to create (S212) the high-definition map, and
analyzing a route which at least two or more of the camera-equipped probe vehicles have passed through to detect an overlapping route and correcting spatial coordinates of a feature point of a road facility object present in the overlapping route based on a difference between absolute spatial coordinates of the feature point determined by the probe vehicles,
wherein the road facility object is a road object positioned on a road or a mid-air object positioned in the air, and wherein the method further comprises determining (S208) whether the road facility object is the road object or the mid-air object based on a property of the road facility object and obtaining absolute spatial coordinates of the road object in each frame of the road image using a homography transform on at least four coordinate points whose spatial coordinates have been known.

7. The method of claim 6, further comprising determining (S207) that a frame when the relative spatial coordinates of the feature point are moved a reference range or more between consecutive frames of the road image is a key frame and obtaining (S209, S210) the relative spatial coordinates and absolute spatial coordinates of the feature point only in the key frame.

8. The method of claim 7, further comprising determining that the same feature point present in a plurality of key frames is a tie point and deleting feature points except for the determined tie point.

9. The method of claim 6, further comprising, if the probe vehicle passes again through an area which the probe vehicle has previously passed through, detecting a loop route from a route along which the probe vehicle has travelled and correcting absolute spatial coordinates of a feature point of a road facility object present in the loop route based on a difference between absolute spatial coordinates of the feature point determined in the past in the area and absolute spatial coordinates of the feature point currently determined.

10. The method of claim 6,
wherein the GCP object includes at least one of a manhole cover, a fire hydrant, an end or connector of a road facility, or a road drainage structure.

**Patentansprüche**

1. Ein System, das eine hochauflösende Karte auf der Grundlage einer Kamera (120) erzeugt, wobei das System umfasst

   mindestens eine oder mehrere Kartenerstellungsvorrichtungen (100), wobei jede Kartenerstellungsvorrichtung ein Gerät ist, das in einem Sondenfahrzeug montiert ist und eine hochauflösende Karte unter Verwendung eines Straßenbildes erstellt, das ein Bild eines Straßeneinrichtungsobjekts enthält, das von einer an dem Sondenfahrzeug befestigten Kamera (120) aufgenommen wurde, wobei jede der mindestens einen oder mehreren hochauflösende Kartenerstellungsvorrichtungen (100) umfasst:

   eine Objekterkennungseinheit (111), die aus jedem Bild des Straßenbildes, ein Straßeneinrichtungsobjekt erkennt, einschließlich mindestens einem von einem Bodenkontrollpunkt (GCP)-Objekt und einem gewöhnlichen Objekt und einer Eigenschaft;
   eine Merkmalspunktextraktionseinheit (112), die einen Merkmalspunkt von mindestens einem oder mehreren Straßeneinrichtungsobjekten aus dem Straßenbild extrahiert;
   eine Merkmalspunktverfolgungseinheit (113), die den Merkmalspunkt in aufeinanderfolgenden Bildern des Straßenbildes anpasst und verfolgt;
   eine Koordinatenbestimmungseinheit (115), die relative räumliche Koordinaten des Merkmalspunkts erhält, um eine Differenz zwischen Kamerapositionsinformationen zu minimieren, die von dem verfolgten Merkmalspunkt und berechnete Kamerapositionsinformationen vorhergesagt werden; und
   eine Korrektureinheit (116), die absolute Raumkoordinaten von dem Merkmalspunkt erhält durch Korrektur der relativen Raumkoordinaten des Merkmalspunkts auf der Grundlage eines Koordinatenpunkts des GCP-Objekts, dessen absolute Raumkoordinaten bekannt sind, wenn das GCP-Objekt anerkannt,
   wobei das Straßeneinrichtungsobjekt ein Straßenobjekt ist, das auf einer Straße positioniert ist, oder ein Mittelluft-Objekt ist, das in der Luft positioniert ist, und wobei die Koordinatenbestimmungseinheit (115) bestimmt, ob das Straßeneinrichtungsobjekt das Straßenobjekt oder das Mittelluft-Objekt ist, basierend auf einer Eigenschaft des Straßeneinrichtungsobjekts und absolute Raumkoordinaten des Straßenobjekts in jedem Einzelbild des Straßenbildes erhält durch eine Homographietransformation an mindestens vier Koordinatenpunkten, deren Raumkoordinaten bekannt gewesen sind;
   wobei das System ferner umfasst einen Kartenerstellungsserver (200), der absolute Raumkoordinaten von einem Merkmalspunkt und eine Eigenschaft von jedem Straßenobjekt sammelt von der mindestens einen oder mehreren Kartenerstellungsvorrichtungen (100), um die hochauflösende Karte zu erstellen,
   wobei der Kartenerstellungsserver (200) eine Route analysiert, die mindestens zwei oder mehr der mit einer Kamera ausgestatteten Sondenfahrzeuge durchfahren haben, um eine überlappende Route zu erkennen, und räumliche Koordinaten eines Merkmalspunkts eines Straßeneinrichtungsobjekts, das in der überlappenden Route vorhanden ist, auf der Grundlage einer Differenz zwischen absoluten räumlichen Koordinaten des Merkmalspunkts korrigiert, die von den Sondenfahrzeugen bestimmt wurden.

2. System nach Anspruch 1, wobei jede der mindestens einen oder mehreren Kartenerstellungsvorrichtungen (100) ferner eine Schlüsselbildbestimmungseinheit (114) umfasst, die bestimmt, dass ein Bild, wenn die relativen räumlichen Koordinaten des Merkmalspunktes um einen Referenzbereich oder mehr zwischen aufeinanderfolgenden Bildern des Straßenbildes verschoben werden, ein Schlüsselbild ist, und die Koordinatenbestimmungseinheit steuert, um eine Berechnung nur in dem Schlüsselbild durchzuführen.

3. System nach Anspruch 2, wobei die Schlüsselbildbestimmungseinheit (114) bestimmt, dass der gleiche Merkmalspunkt, der in einer Vielzahl von Schlüsselbildern vorhanden ist, ein Verknüpfungspunkt ist, und Merkmalspunkte mit Ausnahme des bestimmten Verknüpfungspunktes löscht.

4. System nach Anspruch 1, wobei die Korrektureinheit (116), falls das Sondenfahrzeug erneut einen Bereich durchfährt, den das Sondenfahrzeug zuvor durchfahren hat, eine Schleifenroute aus einer Route, entlang der das Sondenfahrzeug gefahren ist, erkennt und absolute Raumkoordinaten eines Merkmalspunkts eines Straßeneinrichtungsobjekts, das in der Schleifenroute vorhanden ist, auf der Grundlage einer Differenz zwischen absoluten Raumkoordinaten des Merkmalspunkts, die in der Vergangenheit in dem Bereich bestimmt wurden, und absoluten Raumkoordinaten des aktuell bestimmten Merkmalspunkts korrigiert.

5. System nach Anspruch 1, wobei das GCP-Objekt mindestens eines von einem Schachtdeckel, einem Feuerhydranten, einem Ende oder Anschluss einer Straßeneinrichtung oder einee Straßenentwässerungsstruktur umfasst.

**6.** Verfahren zum Erzeugen einer hochauflösenden Karte basierend auf einer Kamera (120), wobei das Verfahren eine hochauflösende Karte unter Verwendung eines Straßenbildes erzeugt, das ein Bild eines Straßeneinrichtungsobjekts enthält, das von einer an einem Sondenfahrzeug befestigten Kamera (120) aufgenommen wurde, wobei das Verfahren umfasst:

Erkennung (S110) eines Straßeneinrichtungsobjekts pro Bild des Straßenbildes, das mindestens eines von einem Bodenkontrollpunkt (GCP) -Objekt und einem gewöhnlichen Objekt sowie einer Eigenschaft umfasst;
Extrahieren (S120) eines Merkmalspunktes von mindestens einem oder mehreren Straßeneinrichtungsobjekten aus dem Straßenbild;
Abgleichen und Verfolgung (S130) des Merkmalspunkts in aufeinanderfolgenden Bildern des Straßenbildes;
Erhalten (S140) von relativen Raumkoordinaten des Merkmalspunktes, um eine Differenz zwischen einer aus dem verfolgten Merkmalspunkt vorhergesagten Kamerapositionsinformation und einer berechneten Kamerapositionsinformation zu minimieren;
Erhalten (S160) von absoluten Raumkoordinaten des Merkmalspunktes durch Korrigieren (S150) der relativen Raumkoordinaten des Merkmalspunktes auf der Grundlage eines Koordinatenpunktes des GCP-Objektes, dessen absolute Raumkoordinaten bekannt sind, wenn das GCP-Objekt erkannt wird,
Erfassen absoluter Raumkoordinaten eines Merkmalspunkts und einer Eigenschaft von jedem Straßeneinrichtungsobjekt von mindestens einem oder mehreren Sondenfahrzeugen durch einen Kartenerstellungsserver (200), um die hochauflösende Karte zu erstellen (S212), und
Analysieren einer Strecke, die mindestens zwei oder mehr der mit Kameras ausgestatteten Sondenfahrzeuge zurückgelegt haben, um eine sich überschneidende Route zu erkennen, und Korrigieren räumlicher Koordinaten eines Merkmalspunkts eines Straßeneinrichtungsobjekts, das in der überlappende Route vorhanden ist, auf der Grundlage einer Differenz zwischen absoluten Raumkoordinaten des von den Sondenfahrzeugen ermittelten Merkmalspunkts,
wobei das Straßeneinrichtungsobjekt ein Straßenobjekt ist, das auf einer Straße positioniert ist, oder ein Mittelluft-Objekt ist, das in der Luft positioniert ist, und wobei das Verfahren ferner ein Bestimmen (S208), ob das Straßeneinrichtungsobjekt das Straßenobjekt oder das Mittelluft-Objekt ist, auf der Grundlage einer Eigenschaft des Straßeneinrichtungsobjekts umfasst und ein Erhalten absoluter räumlicher Koordinaten des Straßenobjekts in jedem Einzelbild des Straßenbildes unter Verwendung einer Homographietransformation an mindestens vier Koordinatenpunkten, deren räumliche Koordinaten bekannt waren.

**7.** Verfahren nach Anspruch 6, ferner umfassend ein Bestimmen (S207), dass ein Bild, bei dem die relativen Raumkoordinaten des Merkmalspunktes um einen Referenzbereich oder mehr zwischen aufeinanderfolgenden Bildern des Straßenbildes verschoben werden, ein Schlüsselbild ist, und ein Erhalten (S209, S210) der relativen Raumkoordinaten und absoluten Raumkoordinaten des Merkmalspunktes nur in dem Schlüsselbild.

**8.** Verfahren nach Anspruch 7, das ferner ein Bestimmen umfasst, dass der gleiche Merkmalspunkt, der in einer Vielzahl von Schlüsselbildern vorhanden ist, ein Verknüpfungspunkt ist, und ein Löschen von Merkmalspunkten mit Ausnahme des bestimmten Verknüpfungspunkts.

**9.** Verfahren nach Anspruch 6, das ferner, falls das Sondenfahrzeug erneut ein Gebiet durchfährt, das das Sondenfahrzeug zuvor durchfahren hat, ein Erkennen einer Schleifenroute aus einer Route, entlang der das Sondenfahrzeug gefahren ist, und ein Korrigieren absoluter Raumkoordinaten eines Merkmalspunkts eines Straßeneinrichtungsobjekts umfasst, das in der Schleifenroute vorhanden ist, auf der Grundlage einer Differenz zwischen absoluten Raumkoordinaten des Merkmalspunkts, die in der Vergangenheit in dem Gebiet bestimmt wurden, und absoluten Raumkoordinaten des Merkmalspunkts, die aktuell bestimmt werden.

**10.** Das Verfahren nach Anspruch 6,
wobei das GCP-Objekt mindestens eines von einem Schachtdeckel, einem Feuerhydranten, einem Ende oder Anschluss einer Straßeneinrichtung oder einer Straßenentwässerungsstruktur umfasst.

**Revendications**

**1.** Système de création de carte haute définition se basant sur une caméra (120), le système comprenant au moins un ou plusieurs dispositifs de création de carte (100), chaque dispositif de création de carte étant ainsi un dispositif qui est monté sur un véhicule sonde, créant une carte haute définition à l'aide d'image de route comportant une image d'un objet d'équipement routier capturé par une caméra (120) fixée au véhicule sonde, chacun parmi l'au moins un ou plusieurs dispositifs de création de carte (100 comprenant:

une unité de reconnaissance d'objet (111) reconnaissant chaque trame de l'image de route, un objet d'équipement routier comportant au moins l'un parmi un objet de point de contrôle au sol (GCP) et un objet ordinaire et une propriété;

une unité d'extraction de point caractéristique (112) extrayant un point de caractéristique d'au moins un ou plusieurs objets d'équipement routier à partir de l'image de route;

une unité de suivi de point caractéristique (113) mettant en correspondante et suivant le point caractéristique dans des trames consécutives de l'image de route;

une unité de détermination de coordonnées (115) obtenant des coordonnées spatiales relatives du point caractéristique pour réduire au minimum une différence entre les informations de pose de caméra prédites à partir du point caractéristique suivi et les informations de pose de caméra calculées; et

une unité de correction (116) obtenant des coordonnées spatiales absolues du point caractéristique par correction des coordonnées spatiales relatives du point caractéristique en fonction d'un point de coordonnée de l'objet GCP dont les coordonnées spatiales absolues sont connues lorsque l'objet GCP est reconnu,

dans lequel l'objet d'équipement routier est un objet de route positionné sur une route ou un objet en plein air positionné dans l'air, et dans lequel l'unité de détermination de coordonnées (115) détermine si l'objet d'équipement routier est l'objet de route ou l'objet en plein air en fonction d'une propriété de l'objet d'équipement routier et obtient les coordonnées spatiales absolues de l'objet de route dans chaque trame de l'image de route à l'aide d'une transformée homographique sur au moins quatre points de coordonnée dont les coordonnées spatiales sont connues;

le système comprenant en outre un serveur de création de carte (200) regroupant les coordonnées spatiales absolues de point caractéristique et une propriété de chaque objet d'équipement de route à partir de l'au moins un ou plusieurs dispositifs de création de carte (100) pour créer la carte haute définition,

dans lequel le serveur de création de carte (200) analyse une route sur laquelle sont passés au moins deux véhicules équipés de caméra pour détecter un itinéraire chevauchant et corrige les coordonnées spatiales d'un point caractéristique d'un objet d'équipement routier présent dans l'itinéraire chevauchant en fonction d'une différence entre les coordonnées spatiales absolues du point caractéristique déterminé par les véhicules sondes.

**2.** Système selon la revendication 1, dans lequel chacun de l'au moins un ou plusieurs dispositifs de création de carte (100) comprend en outre une unité de détermination de trame clé (114) déterminant qu'une trame lorsque les coordonnées spatiales relatives du point caractéristique sont déplacées, une plage de référence ou plus entre des trames consécutives de l'image de route est une trame clé et amenant l'unité de détermination de coordonnées à effectuer le calcul uniquement dans la trame clé.

**3.** Système selon la revendication 2, dans lequel l'unité de détermination de trame clé (114) détermine que le même point caractéristique présent dans une pluralité de trames clés est un point de liaison et supprime les points caractéristiques sauf le point de liaison déterminé.

**4.** Système selon la revendication 1, dans lequel l'unité de correction (116), si le véhicule sonde passe de nouveau dans une zone dans laquelle le véhicule sonde est déjà passé, détecte une rocade à partir de l'itinéraire selon lequel le véhicule sonde s'est déplacé et corrige les coordonnées spatiales absolues d'un point caractéristique d'un objet d'équipement routier présent sur la rocade en fonction d'une différence entre les coordonnées spatiales absolues du point caractéristique déterminé dans la zone et les coordonnées spatiales absolues du point caractéristique actuellement déterminé.

**5.** Système selon la revendication 1, dans lequel l'objet GCP comprend au moins un couvercle de regard, une borne d'incendie et une extrémité ou un connecteur d'un équipement routier ou une structure de drainage de route.

**6.** Procédé de création d'une carte haute définition se basant sur une caméra (120), le procédé créant une carte haute définition à l'aide d'une image de route comprenant une image d'un objet d'équipement routier capturée par une caméra (120) fixée à un véhicule sonde, le procédé consistant à:
reconnaître (S1 10), par trame de l'image de route, un objet d'équipement routier comportant au moins l'un parmi un objet de point de contrôle au sol (GCP) et un objet ordinaire et une propriété;

extraire (S120) un point de caractéristique d'au moins un ou plusieurs objets d'installation routière à partir de l'image de route;
mettre en correspondance et suivre (S130) le point caractéristique dans des trames consécutives de l'image de route;

obtenir (SI40) des coordonnées spatiales relatives du point caractéristique pour réduire au minimum une différence entre les informations de pose de caméra prédites à partir du point caractéristique suivi et les informations de pose de caméra calculées;

obtenir (SI60) des coordonnées spatiales absolues du point caractéristique par correction (SI50) des coordonnées spatiales relatives du point caractéristique en fonction d'un point de coordonnée de l'objet GCP dont les coordonnées spatiales absolues sont connues lorsque l'objet GCP est reconnu, regrouper, par un serveur de création de carte (200), des coordonnées spatiales absolues de point caractéristique et une propriété de chaque objet d'équipement routier à partir d'au moins un ou plusieurs véhicules sondes pour créer (S212) la carte haute résolution, et

analyser un itinéraire qu'ont emprunté au moins deux ou plus véhicules sondes équipés de caméra pour détecter un itinéraire chevauchant et corriger les coordonnées spatiales d'un point caractéristique d'un objet d'équipement routier présent dans l' itinéraire chevauchant en fonction d'une différence entre les coordonnées spatiales absolues du point caractéristique déterminé par les véhicules sondes,

dans lequel l'objet d'équipement routier est un objet routier positionné sur une route ou un objet en plein air positionné dans l'air, et dans lequel le procédé consiste en outre à déterminer (S208) si l'objet d'équipement routier est l'objet routier ou l'objet en plein air basé sur une propriété de l'objet d'équipement routier et à obtenir des coordonnées spatiales absolues de l'objet de route dans chaque trame de l'image de route à l'aide d'une transformée homographique sur au moins quatre points de coordonnée dont les coordonnées spatiales sont connues.

7. Procédé selon la revendication 6, consistant en outre à déterminer (6) qu'une trame lorsque les coordonnées spatiales relatives du point caractéristique sont déplacées une plage de référence ou plus entre des trames consécutives de l'image de route est une trame clé et à obtenir (S209, S210) les coordonnées spatiales relatives et les coordonnées spatiales absolues du point caractéristique uniquement dans la trame clé.

8. Procédé selon la revendication 7, consistant en outre à déterminer que le même point caractéristique présent dans une pluralité de trames clés est un point de liaison et à supprimer les points caractéristiques sauf le point de liaison déterminé.

9. Procédé selon la revendication 6, consistant, si le véhicule sonde passe de nouveau dans une zone dans laquelle le véhicule sonde est déjà passé, à détecter une rocade à partir de l'itinéraire selon lequel le véhicule sonde s'est déplacé et à corriger les coordonnées spatiales absolues d'un point caractéristique d'un objet d'équipement routier présent sur la rocade en fonction d'une différence entre les coordonnées spatiales absolues du point caractéristique déterminé dans la zone et les coordonnées spatiales absolues du point caractéristique déterminé actuellement.

10. Procédé selon la revendication 6,

dans lequel l'objet GCP comprend au moins l'un parmi un couvercle de regard, une borne d'incendie et une extrémité ou un connecteur d'un équipement routier ou une structure de drainage de route.

Fig. 1

Fig. 2

GNSS RECEIVER /140

100

COMMUNICATION UNIT /130

MAP CREATING UNIT /110

CAMERA /120

STORAGE UNIT /150

Fig. 3

/110

OBJECT RECOGNIZING UNIT /111

FEATURE POINT EXTRACTING UNIT /112

FEATURE POINT TRACKING UNIT /113

KEY FRAME DETERMINING UNIT /114

COORDINATE DETERMINING UNIT /115

CORRECTING UNIT /116

Fig. 4

Fig. 5

Fig. 6

START

S110
RECOGNIZE OBJECT AND
PROPERTY OF ROAD FACILITY

S120
EXTRACT FEATURE POINT OF
ROAD FACILITY OBJECT

S130
MATCH AND TRACK FEATURE POINT

S140
DETERMINE SPATIAL COORDINATES OF
FEATURE POINT

S150
CORRECT SPATIAL COORDINATES OF
FEATURE POINT

S160
GATHER SPATIAL COORDINATES AND
REATE HIGH-DEFINITION MAP

Fig. 7

```
                                          ┌─── S200
                        ┌──────────────────────────┐
                        │     CREATE ROAD IMAGE     │
                        └──────────────────────────┘
                                     │
                                     ▼      ┌─── S201
          NO            ◇─────────────────────◇
     ◄────────────────── │     NEW FRAME?      │
                        ◇─────────────────────◇
                                     │ YES
                                     ▼      ┌─── S202
                        ┌──────────────────────────┐
                        │  CORRECT IMAGE DISTORTION │
                        └──────────────────────────┘
                                     │      ┌─── S203
                                     ▼
                        ┌──────────────────────────┐
                        │   RECOGNIZE ROAD FACILITY │
                        │   OBJECT AND PROPERTY     │
                        └──────────────────────────┘
                                     │      ┌─── S204
                                     ▼
                        ┌──────────────────────────┐
                        │    REMOVE MOVING OBJECT   │
                        └──────────────────────────┘
                                     │      ┌─── S205
                                     ▼
                        ┌──────────────────────────┐
                        │    EXTRACT FEATURE POINT  │
                        └──────────────────────────┘
                                     │      ┌─── S206
                                     ▼
                        ┌──────────────────────────┐
                        │      MATCH AND TRACK      │
                        │       FEATURE POINT       │
                        └──────────────────────────┘
                                     │      ┌─── S207
          NO            ◇─────────────────────◇
     ◄────────────────── │     KEY FRAME?      │
                        ◇─────────────────────◇
                                     │ YES
                                     ▼      ┌─── S208
         YES     ◇───────────────────────────◇    NO
     ┌───────────│  ROAD FACILITY OBJECT      │──────────┐
     │           │   PRESENT ON ROAD?         │          │
     │           ◇───────────────────────────◇          │
     ▼  ┌─── S209                                ▼  ┌─── S210
┌──────────────────┐                      ┌──────────────────┐
│ DETERMINE        │                      │ DETERMINE        │
│ COORDINATES      │                      │ COORDINATES      │
│ OF ROAD OBJECT   │                      │ OF MID-AIR OBJECT│
└──────────────────┘                      └──────────────────┘
     │                                           │
     └─────────────────────┬─────────────────────┘
                           ▼      ┌─── S211
              ┌──────────────────────────────┐
              │      CORRECT SPATIAL          │
              │ COORDINATES OF FEATURE POINT  │
              └──────────────────────────────┘
                           │      ┌─── S212
                           ▼
              ┌──────────────────────────────┐
              │        COMPLETE FULL          │
              │    HIGH-DEFINITION MAP        │
              └──────────────────────────────┘
```

Fig. 8

EP 3 842 751 B1

**MAP CREATING DEVICE** /100_1

**MAP CREATING DEVICE** /100_N

**MAP CREATING SERVER** /200

CREATE ROAD IMAGE — S100

RECOGNIZE OBJECT — S110

EXTRACT FEATURE POINT — S120

MATCH AND TRACK FEATURE POINT — S130

DETERMINE SPATIAL COORDINATES OF FEATURE POINT — S140

CORRECT SPATIAL COORDINATES OF FEATURE POINT — S150

CREATE ROAD IMAGE — S100

RECOGNIZE OBJECT — S110

EXTRACT FEATURE POINT — S120

MATCH AND TRACK FEATURE POINT — S130

DETERMINE SPATIAL COORDINATES OF FEATURE POINT — S140

CORRECT SPATIAL COORDINATES OF FEATURE POINT — S150

TRANSMIT ROAD IMAGE, OBJECT PROPERTY, AND FEATURE POINT SPATIAL COORDINATES — S160

TRANSMIT ROAD IMAGE, OBJECT PROPERTY, AND FEATURE POINT SPATIAL COORDINATES — S160

GATHER INFORMATION — S310

ANALYZE ROUTE — S320

DETECT OVERLAPPING ROUTE — S330

CORRECT OVERLAPPING ROUTE — S340

COMPLETE HIGH-DEFINITION MAP — S350

**EP 3 842 751 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XIAOZHI QU.** *Landmark based localization : Detection and update of landmarks with uncertainty analysis,* 12 September 2017